# EUROPÄISCHE PATENTANMELDUNG

(11) **EP 0 965 822 A2**
(43) Veröffentlichungstag der Anmeldung: **22.12.1999**
(21) Anmeldenummer: 99111576.7
(22) Anmeldetag: 15.06.1999
(51) Int. Cl.: G01D 11/30

(54) **Messsystem**

(30) Priorität: 15.06.1998 DE 19826248
(71) Anmelder: Ratiotec Konstruktion und Vertrieb von Sondermaschinen und Vorrichtungen GmbH, 66636 Tholey (DE)
(72) Erfinder: Busch, Helmut, 66636 Tholey (DE)
(74) Vertreter: Bernhardt, Winfrid, Dr.-Ing.

(57) **Zusammenfassung**

Die Erfindung betrifft ein Meßsystem mit einer Reihenanordnung von entlang einem Meßobjekt (55) mit unterschiedlichem Abstand in Richtung auf das Meßobjekt positionierbaren Meßfühlern (40,41,42), insbesondere Längenmeßtastern. Gemäß der Erfindung sind entlang dem Meßobjekt (55) unter Bildung der Meßfühler-Reihenanordnung aneinanderzureihende Meßfühler-Halterungsmodule vorgesehen, die zur Einstellung gewünschter Meßfühler-Abstandspositionen verstellbar sind. Durch diese Erfindungslösung lassen sich in ihrer Länge und den Abstandspositionen variable Reihenanordnungen von Meßfühlern mit geringem Aufwand kraftschlüssig und stabil montieren. Die Halterungsmodule bildende Schlittenblöcke sind über ein neues Klemmsystem mit einem Klemmelement und einer Einrichtung zur Beaufschlagung des Klemmelements mit einer Klemmkraft arretierbar, wobei die Einrichtung eine Stellschraube aufweist, die in einem Gewinde in einem der Blöcke unter Erzeugung der Klemmkraft senkrecht zur Schraubendrehachse mit einem Endteil gegen ein zur Klemmkrafteinrichtung geneigten Anschlag an dem Klemmelement oder einem die Klemmkraft auf das Klemmelement übertragenden Zwischenglied drehbar ist.

## Beschreibung

Die Erfindung betrifft ein Meßsystem mit einer Reihenanordnung von entlang einem Meßobjekt mit unterschiedlichem Abstand zum Meßobjekt positionierbaren Meßfühlern sowie ein in dem Meßsystem verwendetes Klemmsystem zur Herstellung einer Klemmverbindung zwischen zwei Teilen über ein durch eine Klemmkraft beaufschlagbares Klemmelement.

Derartige Meßsysteme werden z.B. zur Vermessung von Wellen mit in Richtung der Wellenachse variierendem Durchmesser verwendet. Meistens werden zwei Reihenanordnungen von Längenmeßtastern an den Längsseiten an die Welle angesetzt und die Längenmeßsignale einander gegenüberliegender Meßtaster zur Bestimmung des Wellendurchmessers gegeneinander verrechnet. Entsprechend dem variierenden Durchmesser der Welle sind die einzelnen Meßtaster in einer Grundvorschubpositionen in bezug auf die Welle derart angeordnet, daß die zu erwartenden Meßgrößenvariationen in den Verschiebungsbereich der Tastenden alter verwendeten Meßtaster fallen.

Um langfristig eine hinreichende Meßgenauigkeit zu gewährleisten, kommt es darauf an. daß die für ein bestimmtes Werkstück mit hohem Arbeitsaufwand eingestellten Grundvorschubwerte über einen möglichst langen Betriebszeitraum konstant bleiben und ein häufiges Nachstellen vermieden wird.

Der vorliegenden Erfindung liegt die Aufgabe zugrunde, ein neues Meßsystem der eingangs erwähnten Art einschließlich eines neuen Klemmsystems zu schaffen, das bei hoher Stabilität der Meßgeometrie mit geringem Arbeitsaufwand an verschiedene Meßobjekte angepaßt werden kann.

Das diese Aufgabe lösende Meßsystem nach der Erfindung ist gekennzeichnet durch entlang dem Meßobjekt unter Bildung der Meßfühler-Reihenanordnung aneinanderzureihende Meßfühler-Halterungsmodule, die zur Einstellung gewünschter Meßfühler-Abstandspositionen verstellbar sind.

Vorteilhaft ist das Meßsystem nach der Erfindung modular aufgebaut, so daß durch Zusammenfügung derjeweils zur Einstellung der Vorschubpositionen verstellbaren Module in Anpassung an unterschiedliche Meßobjekte Meßfühler-Reihenanordnungen variabler Länge gebildet werden können.

Vorzugsweise sind die Meßfühler-Halterungsmodule, insbesondere über ein gemeinsames Trägerteil. zu einem stabilen, konstante Abstandseinstellungen gewährleistenden Halterungsblock verbindbar, wobei die Meßfühler-Halterungsmodule z.B. unter Bildung eines in Richtung entlang dem Meßobjekt konstanten Rasterabstandes aneinander angelegt werden können.

In einer bevorzugten Ausführungsform der Erfindung sind je Meßfühler-Halterungsmodul mehrere, insbesondere drei. Meßfühler gehaltert. wobei die Meßfühler an den Halterungsmodulen jeweils an einem in der gewünschten Vorschubposition arretierbaren Trägerschlitten angebracht sind. Vorzugsweise sind ein Hauptschlitten und zwei mit dem und gegen den Hauptschlitten bewegbare Nebenschlitten gebildet. Bei dieser Ausführungsform können die an den Schlitten angebrachten Meßfühler in jede gewünschte Abstandsposition gebracht werden, wobei der Abstand des am Hauptschlitten angebrachten Fühlers allein durch Verschiebung des Hauptschlittens eingestellt werden kann. Die durch den Hauptschlitten getragenen und gegen diesen beweglichen Nebenschlitten erlauben dann die Vorschubeinstellungen für die beiden weiteren Meßfühler. Die Meßfühlerspitze ist verstellbar ausgeführt, um eine Feinverstellung des Antastpunkts zu ermöglichen.

In der bevorzugten Ausführungsform der Erfindung sind die Trägerschlitten als Blöcke mit einer sich in Vorschubrichtung erstreckenden Bohrung für die Aufnahme eines Meßfühlers ausgebildet. Bei dem Meßfühler handelt es sich vorzugsweise um einen Längenmeßtaster mit einem Tastende, das von einem hülsenförmigen Gehäuse vorsteht, welches gegen die Bohrungswand anliegt. Die Bohrung kann geschlitzt sein und ihr Innendurchmesser über Klemmbacken verengt werden, so daß das Gehäuse des Meßtasters in der Bohrung eingeklemmt werden kann.

Die Trägerschlitten sind in der bevorzugten Ausführungsform durch Verklemmung in ihrer Schlittenführung arretierbar, wobei die Schlittenführung eine hinterschnittene Nut für den Eingriff eines Klemmelements umfaßt und eine Einrichtung zur Beaufschlagung des Klemmelements mit einer Klemmkraft vorgesehen ist. Das Klemmelement kann z.B. ein Bolzen mit einem Kopfteil sein, welcher in die hinterschnittene Nut eingreift.

Vorzugsweise wird in dem Meßsystem zur Verbindung der Schlittenblöcke ein neues Klemmsystem verwendet, in welchem die Einrichtung zur Beaufschlagung des Klemmelements mit einer Klemmkraft eine Stellschraube aufweist, die unter Erzeugung der Klemmkraft senkrecht zur Schraubendrehachse mit einem Endteil gegen einen zur Klemmkraftrichtung geneigten Anschlag an dem Klemmelement oder an einem die Klemmkraft auf das Klemmelement übertragenden Zwischenglied drehbar ist.

Vorzugsweise ist der Schraubenendteil als Spitze oder/und Rundung und der Anschlag durch eine zu dem Schraubenendteil mittenversetzt angeordnete Gegensenkung gebildet. Durch eine solche Anordnung kann durch eine minimale Stellbewegung an der Schraube eine ausreichende Klemmkraft erzeugt werden, indem die Rundung oder Spitze entlang dem durch die Gegensenkung gebildeten, geneigten Anschlag gleitet und der Schraubenendteil und die Gegensenkung in zueinander konzentrische Anordnung gebracht werden.

Vorzugsweise erstreckt sich die Stellschraubenachse in der Vorschubrichtung. Im aneinan-dergereihten Zustand der Module ist der Stellschraubenkopf damit zugänglich, und es können Verstellungen an einem durch die Halterungsmodule gebildeten Halterungsblock ohne Demontage des Blocks durchgeführt werden.

Vorzugsweise sind zwei in koaxialer Anordnung auf gegenüberliegenden Seiten an dem Klemmelement oder Zwischenglied angreifende Stellschrauben vorgesehen, wobei es sich bei dem Zwischenglied vorzugsweise um einen Bolzen handelt, der durch eine Querbohrung in dem Klemmelement axial beweglich geführt ist und an seinen Stirnenden die Gegensenkung aufweist.

In der Reihenanordnung von Meßfühlern können Meßtaster mit in oder senkrecht zur Vorschubrichtung unter Erzeugung eines Längenmeßsignals bewegbaren Tastenden verwendet werden. Bei dem Meßobjekt handelt es sich vorzugsweise um eine Welle mit in Richtung ihrer Achse variierendem Durchmesser. Durch die Reihenanordnung von Meßfühlern, die in einer bevorzugten Ausführungsform einen Rasterabstand von 10 mm zueinander aufweisen, können solche Wellen in einem Arbeitsgang über ihre gesamte Länge vermessen werden. Durch die verstellbare Meßfühlerspitze können die Rasterabstände von 10 mm stufenlos unterteilt werden.

In einer weiteren bevorzugten Ausführungsform der Erfindung weist das gemeinsame Trägerteil für die Halterungsmodule, bei dem es sich z.B. um eine Halterungsschiene handelt, eine hinterschnittene Nut auf, und die Halterungsmodule sind an dem Trägerteil in der gleichen Art wie die Trägerschlitten in ihren Führungen arretierbar.

Die Erfindung soll nun anhand eines Ausführungsbeispiels und der beiliegenden, sich auf dieses Ausführungsbeispiel beziehenden Zeichnungen näher erläutert und beschrieben werden. Es zeigen:
- Fig. 1: einen Halterungsmodul eines erfindungsgemäßen Meßsystems in einer Rückansicht,
- Fig. 2: den Halterungsmodul von Fig. 1 in einer teilweise geschnittenen Seitenansicht,
- Fig. 3: einen bei dem Halterungsmodul von Fig. 1 und 2 verwendeten Trägerschlitten für einen Meßtaster,
- Fig. 4a: einen durch Halterungsmodule gemäß Fig. 1 bis 3 gebildeten Halterungsblock, und
- Fig. 4b: eine Welle mit in Wellenachsenrichtung variierendem Durchmesser, welche über an dem Halterungsblock von Fig. 4a gehaltene Meßtaster vermessen wird.

In den Figuren ist mit dem Bezugszeichen 1 ein Trägerblock eines Halterungsmoduls bezeichnet, in welchen an einer Seite eine hinterschnittene Führungsnut 2 mit T-förmigem Querschnitt durchgehend eingearbeitet ist. Parallel zur Führungsnut weist der Halterungsblock 1 eine Längsbohrung 3 mit Gewindeabschnitten 4 und 5 an ihren Enden auf, in welche kopflose Stellschrauben 6 und 7 eingedreht sind. Die Schrauben 6 und 7 sind jeweils mit einem als Spitze ausgebildeten Endteil 8 bzw. 9 versehen, welcher in entsprechend den Spitzen ausgebildete Gegenflächen bzw. Gegensenkungen eingreift, die an den Stirnenden eines Zwischengliedes 10 gebildet sind. Das Zwischenglied 10 ist durch eine Querbohrung in einem Bolzen 11 mit einem Kopf 12 geführt, wobei der Bolzen 11 in einer zu der Bohrung 3 senkrechten Bohrung 13 in dem Trägerblock 1 angeordnet ist.

Mit 14 und 15 sind auf gegenüberliegenden Seiten der Bohrung 13 von dem Trägerblock 1 vorstehende Führungsstege bezeichnet.

Wie noch erläutert wird, ist der Durchmesser des Zwischengliedes 10 gegenüber dem Durchmesser der Bohrung 3 etwas verringert, so daß das Zwischenglied 10 in der Bohrung 3 in Richtung der Achse der Bohrung 13 ein gewisses Spiel hat.

Mit dem Bezugszeichen 16 ist ein in der hinterschnittenen Nut 2 geführter Trägerschlitten bezeichnet, der als Block ausgebildet ist und eine durchgehende Längsbohrung 17 mit Gewindeabschnitten 18 und 19 an beiden Enden aufweist. Wie in der Längsbohrung 3 des Trägerblocks 1 sind in die Gewindeabschnitte 18 und 19 Stellschrauben 20 und 21 eingedreht, welche mit kegligen Spitzen 22 und 23 jeweils an einer entsprechend geformten Gegensenkung angreifen, wobei die Gegensenkung stirnseitig an einem bolzenförmigen Zwischenglied 24 gebildet sind. Das Zwischenglied 24 ist beweglich durch eine Querbohrung in einem Bolzen 25 mit einem Kopf 26 geführt. Der Trägerschlitten 16 greift mit einem Führungssteg 27 in die Nut 2 ein, wobei der Kopf 26 des Bolzens 25 im hinterschnittenen Teil der Nut 2 angeordnet ist.

Wie das Zwischenglied 10 in der Bohrung 3 weist auch das Zwischenglied 24 in der Bohrung 17 ein gewisses Spiel auf.

Auf dem blockförmigen Trägerschlitten 16 sind am dem Führungssteg 27 abgewandten Ende Abstufungen vorgesehen, durch die ein Blockendabschnitt 28 mit verringerter Dicke gebildet ist.

In dem Blockendabschnitt 28 sind einander gegenüberliegende, hinterschnittene Führungsnuten 29 und 30 gebildet, die sich parallel zu der Bohrung 17 erstrecken.

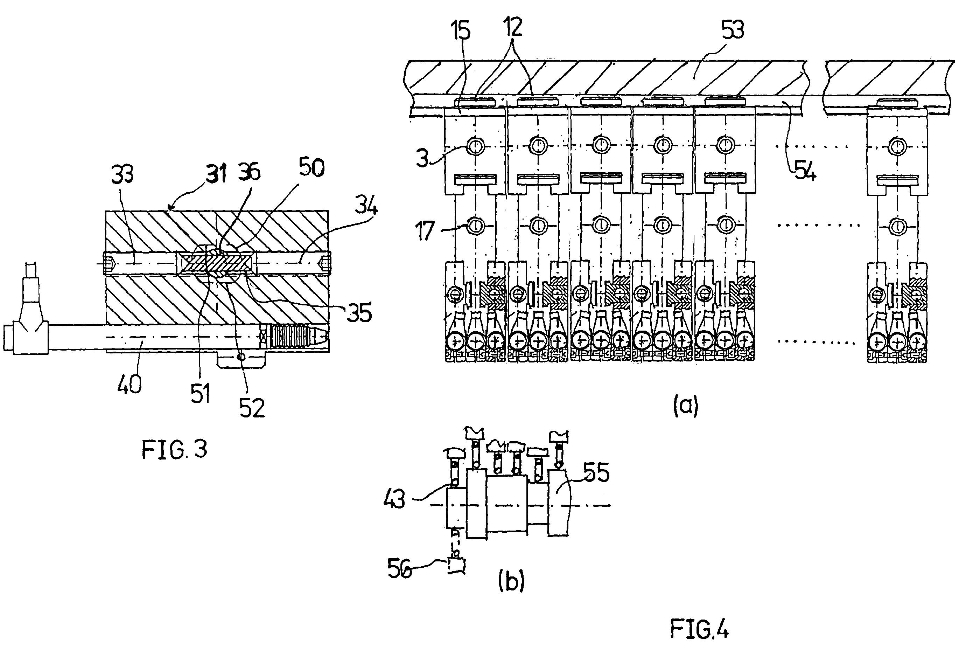

In den gebildeten Abstufungen und Führungsnuten 29,30 sind weitere zueinander spiegel-bildlich ausgebildete Trägerschlitten 31 und 32 geführt, welche der Längsbohrung 17 entsprechende Längsbohrungen mit Gewinden für Stellschrauben 33,34 aufweisen. Die Stellschrauben wirken in der vorangehend beschriebenen Weise gegen Zwischenglieder 35, die beweglich durch eine Querbohrung in einem Bolzen 36 geführt sind. In die Führungsnuten 29 und 30 greifen die Trägerschlitten 31,32 mit einem kurzen vorstehenden Steg ein, wobei in dem hinterschnittenen Teil der Nuten 29,30 der Kopf 50 des Bolzens 36 zur Anordnung kommt. Fig. 3, welche den Nebenschlitten 31 gesondert in einer Schnittdarstellung zeigt, ist zu entnehmen, daß ein Kopf 50 des Bolzens 36 gerade Seitenführungen 51 und 52 aufweist, die eine Verschiebung im hinterschnittenen Teil der Führungsnut 29 erleichtern. Entsprechend sind auch die vorangehend erwähnten Bolzenköpfe ausgebildet.

Jeder der Trägerschlitten 16,31,32 weist an einem dem Trägerblock 1 des Halterungsmoduls abgewandten Ende eine zu den Längsbohrungen parallele Aufnahmebohrung 37, 38 bzw. 39 auf, in welche ein Längenmeßtaster 40, 41 bzw. 42 eingesetzt ist. Die genannten Meßtaster weisen jeweils ein gegen ein Meßobjekt anzulegendes Tastende 43 und einen Kabel-anschluß 44 für die übertragung eines durch den Meßtaster erzeugten elektrischen Meßsignals auf.

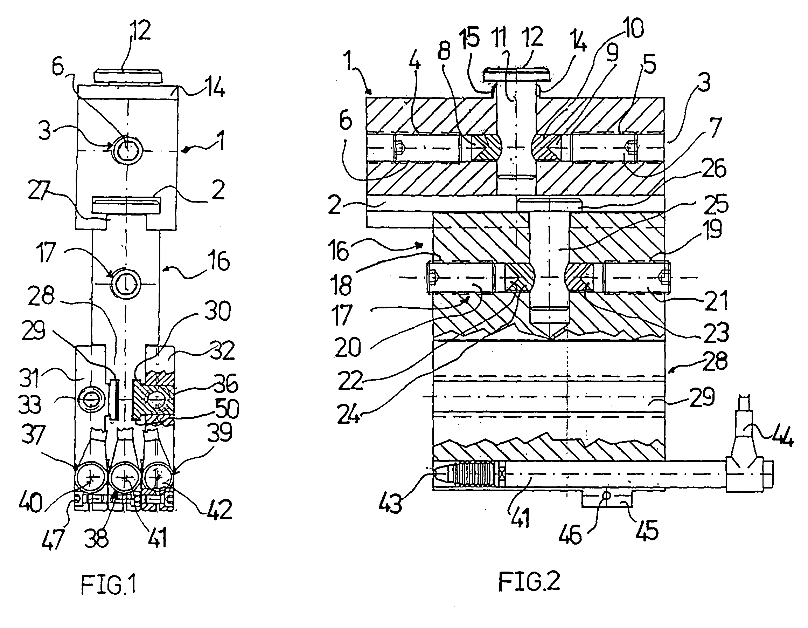

Wie Fig. 1 und 2 entnommen werden kann, sind die Längsbohrungen 37 bis 39 jeweils geschlitzt, und es sind Klemmbacken 45 mit Bohrungen 46 für Klemmschrauben 47 vorgesehen, so daß jeweils ein hülsenförmiger Abschnitt der Meßtaster in den Längsbohrungen 37 bis 39 festgeklemmt werden kann.

Die Klemmbacken der einzelnen Trägerschlitten sind in Längsrichtung der Bohrungen 37 bis 39 zueinander versetzt angeordnet, um die Zugänglichkeit zu den Stellschrauben 47 zu gewährleisten.

Der Trägerschlitten 16 bildet einen Hauptträgerschlitten, mit dem die Trägerschlitten 31 und 32 mitbewegt werden können. Die Trägerschlitten 31 und 32 bilden Nebenschlitten, die ihrerseits gegen den Hauptträgerschlitten 16 verschiebbar sind.

Die durch den Blockendabschnitt 28 und die Nebenträgerschlitten 31,32 gebildeten Blöcke weisen in einer Richtung senkrecht zur Schlittenverschiebungsrichtung die gleiche Breite wie die Trägerblöcke 1 auf.

Es wird nun auf Fig. 4 Bezug genommen, wo mit dem Bezugszeichen 53 eine Trägerschiene als Verbindungsteil für eine Anzahl von Halterungsmodulen bezeichnet ist. In der Trägerschiene ist eine hinterschnittene Nut 54 vorgesehen, in welche die Halterungsmodule mit den Stegteilen 14 und 15 und den Bolzenköpfen 12 eingreifen.

In Fig. 4b ist mit dem Bezugszeichen 55 eine ein Meßobjekt bildende Welle bezeichnet, deren Durchmesser in Richtung der Wellenachse variiert. Gegen die Welle stehen Längenmeßtaster mit Tastenden 43 vor, wobei durch Strichlinien 56 angedeutet ist, daß in dem gezeigten Fall zwei einander gegenüberliegende Reihen von Meßtastern an die Welle 55 angesetzt sind.

Aus den anhand der Fig. 1 bis 3 beschriebenen Halterungsmodulen lassen sich Halterungsblöcke gemäß Fig. 4a in variabler Länge herstellen, indem die einzelnen Halterungsmodule mit ihren Führungsstegen 14 und 15 und den Bolzenköpfen 12 in die Nut 54 der Trägerschiene 53 eingeschoben werden. Dabei kommen die Trägerblöcke 1 und die durch die Nebenschlitten 31,32 und den Blockendabschnitt 28 gebildeten Blöcke der Halterungsmodule gegenseitig zur Anlage, wobei zwischen den Meßtastern in der durch die Aneinanderreihung der Halterungsmodule gebildeten Reihenanordnung von Meßtastern ein konstanter Rasterabstand vorliegt, der in dem hier betrachteten Fall 10 mm beträgt.

Über die Schrauben 6 und 7 können die einzelnen Halterungsmodule in der hinterschnittenen Nut 54 mit geringem Stellaufwand verklemmt werden. Indem die Gegensenkung am Zwischenglied 10 zu den Kegelspitzen 8 und 10 der Stellschrauben 6 und 7 etwas mittenversetzt angeordnet sind, bewirkt ein Eindrehen der Stellschrauben gegen die Gegenflächen die Ausübung einer zur Schraubenachse der Stellschrauben senkrechten Kraft auf den Bolzen 11, welcher mit seinem Kopf 12 gegen den Trägerblock 1 gezogen wird. Dabei kann eine Drehverstellung beider oder auch nur einer der Stellschrauben 6,7 erfolgen. Durch die Beweglichkeit des Zwischengliedes 10 werden auch bei Verstellung nur einer Stellschraube beide Gegenflächen des Zwischengliedes 10 zu den als Kegelspitze ausgebildeten Stellschraubenendteilen 8,9 unter Zugkraftausübung in Richtung der Achse des Bolzens 11 zentriert.

Nach der Befestigung der Halterungsmodule an der Trägerschiene, die geeignet an einem nicht gezeigten Trägergestell einer Meßeinrichtung angebracht werden kann, lassen sich entsprechend einer auszumessenden Welle 55 verschiedene Vorschubgrundpositionen für die einzelnen Längenmeßtaster der Reihenanordnung von Längenmeßtastern einstellen, wozu die Hauptträgerschlitten und Nebenträgerschlitten geeignet zu verschieben und dann über die beschriebenen Klemmeinrichtungen, die in gleicher Weise ausgebildet sind, wie die zur Befestigung der Halterungsmodule an der Trägerschiene 53 verwendeten Klemmeinrichtungen, zu arretieren sind. Die Bohrungen für die Stellschrauben sind vorteilhaft so angeordnet, daß die Stellschrauben im aneinandergefügten Zustand der Halterungsmodule von zwei Seiten zugänglich sind. Auch zur Einstellung der Vorschubgrundpositionen ist ein nur geringer Aufwand erforderlich, indem die erforderliche Klemmkraft schon bei geringem Drehwinkel der Stellschrauben erreichbar ist.

Der in Fig. 4a gezeigte Halterungsblock weist eine hohe Stabilität auf, so daß voreingestellte Positionen der Meßtaster über einen langen Betriebszeitraum erhalten bleiben. Eine konstante Meßgeometrie wird nicht zuletzt auch dadurch erreicht, daß die Längenmeßtaster über einen großen Teil ihrer Hülsenlänge in den blockartig ausgebildeten Trägerschlitten eingespannt sind und mit ihren Tastenden nur über eine kurze Länge von den Trägerschlittenblöcken vorstehen.
Durch den modularen Aufbau der Halterungsblöcke und den geringen Einstellaufwand lassen sich leicht an unterschiedliche Meßobjekte angepaßte Reihenanordnungen von Meßtastern bilden.

Bei dem Anwendungsbeispiel von Fig. 4 sind zwei Reihenanordnungen von Meßtastern, die durch Halterungsblöcke gemäß Fig. 4a gehaltert sind, verwendet. Es ist denkbar, über eine weitere Reihenanordnung von Meßtastern mit zur Vorschubrichtung senkrecht bewegbaren Tastenden die Breiten der einzelnen, unterschiedliche Durchmesser aufweisende Wellenabschnitte zu messen.

Die Tastspitzen der Längenmeßtaster können verschwenkbar und in verschiedenen Schwenkstellungen arretierbar sein, so daß die Abstände zwischen den Tastenden nur im Mittel gleich dem genannten Rasterabstand sind.

Die Zwischenglieder 10,24,35 könnten jeweils durch mehrere, zur Verklemmung verwendete Klemmbolzen 11,25,36 geführt sein. Insbesondere könnten zur Verbesserung der Schlittenführung und Erhöhung der Klemmsicherheit jeweils zwei Klemmbolzen 11,25,36 verwendet werden.

## Patentansprüche

1. Klemmsystem zur Herstellung einer Klemmverbindung zwischen zwei Blöcken (16;31;32) über ein Klemmelement (25;36), mit einer Einrichtung zur Beaufschlagung des Klemmelements (25;36) mit einer Klemmkraft,
dadurch gekennzeichnet,
daß die Einrichtung zur Beaufschlagung des Klemmelements (25;36) eine Stellschraube (20,21; 33,34) aufweist, die in einem Gewinde in einem der Blöcke unter Erzeugung der Klemmkraft senkrecht zur Schraubendrehachse mit einem Endteil gegen ein zur Klemmkraftrichtung geneigten Anschlag an dem Klemmelement oder einem die Klemmkraft auf das Klemmelement übertragenden Zwischenglied (24;35) drehbar ist.

2. Klemmsystem nach Anspruch 1,
dadurch gekennzeichnet,
daß der Schraubenendteil (22,23) als Spitze oder/und Rundung ausgebildet und der Anschlag durch eine zu dem Schraubenendteil mittenversetzt angeordnete Gegensenkung gebildet ist.

3. Klemmsystem nach Anspruch 1 oder 2,
dadurch gekennzeichnet,
daß zwei auf gegenüberliegenden Seiten an dem Klemmelement oder Zwischenglied (24;35) angreifende Stellschrauben (20,21;33,34) vorgesehen sind.

4. Klemmsystem nach einem der Ansprüche 1 bis 3,
dadurch gekennzeichnet,
daß das Zwischenglied gegen das Klemmelement beweglich ist und als Zwischenglied insbesondere ein durch eine Querbohrung in dem Klemmelement (25;36) geführter Bolzen (23;35) vorgesehen ist.

5. Meßsystem mit einer Reihenanordnung von entlang einem Meßobjekt (55)mit unterschiedlichem Abstand zum Meßobjekt positionierbaren Meßfühlern (40-42), gekennzeichnet durch entlang dem Meßobjekt (55) unter Bildung der Meßfühler-Reihenanordnung aneinanderzureihende Meßfühler-Halterungsmodule, die zur Einstellung gewünschter Meßfühler-Abstandspositionen verstellbar sind.

6. Meßsystem nach Anspruch 5,
dadurch gekennzeichnet,
daß die Meßfühler (40-42) an den Halterungsmodulen jeweils an einem in der gewünschten Vorschubposition arretierbaren Trägerschlitten (16;31;32) angebracht sind.

7. Meßsystem nach Anspruch 6,
dadurch gekennzeichnet,
daß als Trägerschlitten ein Hauptschlitten (16) sowie zwei mit dem und gegen den Hauptschlitten (16) bewegbare Nebenschlitten (31;32) vorgesehen sind.

8. Meßsystem nach der Anspruch 6 oder 7,
dadurch gekennzeichnet,
daß die Trägerschlitten (16;31;32) durch Verklemmung in einer Schlittenführung (2,29,30) arretierbar sind und die Schlittenführung eine hinterschnittene Nut (2,29,30) für den Eingriff eines Klemmelements (25;36) umfaßt und eine Einrichtung zur Beaufschlagung des Klemmelements (25;36) mit einer Klemmkraft vorgesehen ist.

9. Meßsystem nach Anspruch 8,
dadurch gekennzeichnet,
daß die Einrichtung zur Beaufschlagung des Klemmelements (25;36) eine Stellschraube (20,21;33,34) aufweist, die in einem Gewinde in einem der Blöcke unter Erzeugung der Klemmkraft senkrecht zur Schraubendrehachse mit einem Endteil (22,23) gegen einen zur Klemmkraftrichtung geneigten Anschlag an dem Klemmelement oder einem die Klemmkraft auf das Klemmelement übertragenden Zwischenglied (24;35) drehbar ist.

10. Meßsystem nach Anspruch 9,
dadurch gekennzeichnet,
daß sich die Stellschraubenachse in der Vorschubrichtung erstreckt.
